# EUROPÄISCHE PATENTSCHRIFT

(11) **EP 1 390 953 B1**
(45) Veröffentlichungstag und Bekanntmachung des Hinweises auf die Patenterteilung: **12.05.2010**
(21) Anmeldenummer: 02726159.3
(22) Anmeldetag: 13.03.2002
(51) Int. Cl.: G21F 5/12, B65D 45/32, F16J 13/08

(54) **DECKEL FÜR EIN DOPPELDECKELSYSTEM MIT KLEMMVERSCHLUSSMECHANISMUS**
COVER FOR A DUAL COVERING SYSTEM WITH A CLAMPING CLOSURE MECHANISM
COUVERCLE POUR UN SYSTEME A DOUBLE COUVERCLE, POURVU D'UN MECANISME DE FERMETURE PAR SERRAGE

(30) Priorität: 10.05.2001 DE 10122606
(43) Veröffentlichungstag der Anmeldung: 25.02.2004
(73) Patentinhaber: Karlsruher Institut für Technologie, 76131 Karlsruhe (DE)
(72) Erfinder: LEHNING, Helmut, 27245 Barenburg (DE); MONZ, Michael, 46244 Bottrop (DE)
(74) Vertreter: Rückert, Friedrich
(86) Internationale Anmeldenummer: PCT/EP2002/002763
(87) Internationale Veröffentlichungsnummer: WO 2002/091391

(56) Entgegenhaltungen:
- WO-A-97/47014
- DE-C- 397 845
- US-A- 5 975 326

## Beschreibung

Die vorliegende Erfindung betrifft einen Deckel als eine Teilkomponente eines Doppeldeckelsystems zum gasdichten Verschließen eines Behälters vorzugsweise für radioaktive oder toxische Abfälle gemäß des Oberbegriffs des Patentanspruchs.

Zum Einbringen radioaktiver oder toxischer Abfälle aus Containments in Behälter werden sogenannte Doppeldeckelsysteme verwendet. Dabei wird der Behälter mit seinem Verschlussdeckel vorzugsweise von unten an den Verschlussdeckel des Containments angekoppelt, wobei in dieser Position die Deckel des Behälters und des Containments gasdicht miteinander verbunden werden und so zu einem sogenannten Doppeldeckel werden. Dieser Doppeldeckel kann nach dem Ankoppeln als Einheit von den beiden aneinandergeschobenen und gasdicht nach außen hin abgedichteten Öffnungen in das Containment hinein geöffnet, der Schadstoff durch die Öffnungen in den Behälter umgeladen und die Öffnungen mit dem Doppeldeckel nach dem Umladen wieder geschlossen werden. Im Anschluss daran wird der Doppeldeckel durch Abkoppeln wieder getrennt, wobei durch das Konzept des Doppeldeckelsystems sichergestellt ist, dass nur die Innenflächen der Behälter und der Deckel durch den umgefüllten Schadstoff kontaminierbar sind.

Zum Betätigen eines Doppeldeckels müssen jedoch die Verschlussmechanismen der beiden einzelnen Deckel miteinander gekoppelt und containmentseitig, d. h. von einer Seite her ent- und verriegelbar sein. Aus diesem Grund ist der Deckel des Behälters auf der dem Behälter abgewandten Seite mit einem zentralen Greifkopf für die formschlüssige Aufnahme des Deckels durch einen Greifer im Deckel des Containments ausgestattet. Zum Zwecke der Ent- und Verriegelung ist in dem Greifkopf ein Bundbolzen als eine Komponente des Klemmverschlussmechanismus gegen eine Feder wirkend eindrückbar axial gelagert. Ist der Bundbolzen nicht eingedrückt, bewirkt die Federkraft der Feder über den Verschlussmechanismus ein Verriegeln des Deckels in der Behälteröffnung, die durch Eindrücken des Bundbolzens gegen die Federkraft wieder entriegelt wird.

DE 3425979 C2 beschreibt einen derartigen Deckel mit einem zentralen Greifkopf und einen axial in diesem gelagerten Bundbolzen für einen Behälter. Der Deckel weist einen Klemmverschlussmechanismus mit mehreren behälterseitigen Klemmvorrichtungen auf, welche am Deckelrand über den Deckelumfang verteilt radial über den Klemmverschlussmechanismus gekoppelt synchron nach außen wirken. Für die Entriegelung wird der Bundbolzen in den Greifkopf eingedrückt, wobei dieser auf einen starren Haltearmträger, welcher behälterseitig parallel zum Deckel angeordnet ist und an jedem Haltearmende je ein Hebel radial nach außen schwenkbar befestigt ist. Diese Hebel werden durch ein mit dem Deckel verbundene Öse geführt und durch die Relativbewegung von Haltearmträger und Deckel zueinander gleichzeitig durch Loslassen des Bundbolzens nach außen ausgefahren (Verriegelung) oder durch Eindrücken des Bundbolzens eingefahren (Entriegelung). Der Behälter weist zur formschlüssigen Aufnahme der Hebel eine umlaufende Sicke auf. Durch die während des Ver- und Entriegelungsvorganges auftretenden Kräfte kommt es insbesondere bei den in den Ösen geführten Hebel, d. h. im Bereich der Klemmvorrichtungen zu erhöhter Reibung und damit zu einem erhöhten Kräftebedarf für die Betätigung der Doppeldeckelsystems.

Aufgabe der vorliegenden Erfindung ist es, einen Deckel eines Behälters als eine Teilkomponente eines Doppeldeckelsystems anzugeben, welcher gegenüber den genannten Stand der Technik konstruktiv optimierte Klemmvorrichtungen mit geringeren Reibungsverlusten aufweist.

Ferner soll das optimierte Klemmsystem eine grundsätzlich andere Bauart der Kinematik aufweisen, welche gemeinsam mit einer bauartbedingten prinzipiellen präziseren Herstellbarkeit deren Einzelteile eine wesentlich zuverlässigere Dichtheit des verschlossenen Behälters sicherstellt.

Zur Lösung der Aufgabe schlägt die vorliegende Erfindung das Merkmal gemäß des kennzeichnenden Teil des Patentanspruchs vor.

Einzelheiten der vorliegende Erfindung werden im folgenden anhand einer Figur eines Ausführungsbeispiels erläutert.

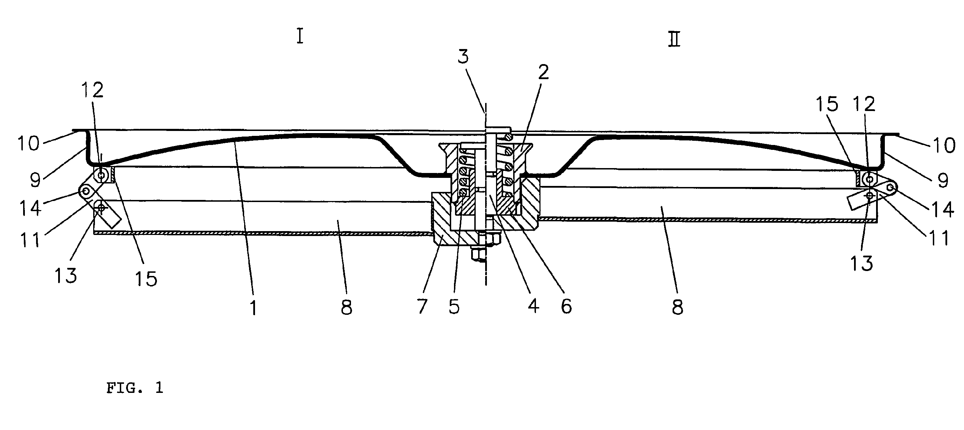

Die Figur zeigt eine Schnittdarstellung des Deckels 1 in der beschriebenen Ausführungsform ohne Behälter und ohne sonstiger containmentseitiger Komponenten, beispielsweise den Greifer für den Greifkopf 2. Der Deckel ist links der axialen Symmetrielinie 3 im entriegelten Zustand (Seite I) und rechts der axialen Symmetrielinie 3 im verriegelten Zustand (Seite II) dargestellt. Weitere Komponenten des Deckels sind der Klemmverschlussmechanismus, bestehend aus dem Bundbolzen 4, einer Druckfeder 5, einer Federführung 6, einer Buchse 7 und aus U-Profilen 8, sowie die Klemmvorrichtungen.

Der Deckel 1 weist an seinem umlaufenden Rand eine vorzugsweise zylindrisch oder kegelstumpfförmig umlaufende Führungsfläche 9 und eine auf einer Ebene liegenden Dichtfläche 10 auf, die an die Öffnung des zu verschließenden, nicht weiter dargestellten Behälters konstruktiv angepasst sein muss. Die Öffnung eines Behälters für radioaktive oder toxische Abfälle ist im Allgemeinen eben und weist eine runde oder polygonale, d. h. eine mehreckige Form auf. Zwischen der Dichtfläche 10 des Deckels 1 und der zu schließenden Behälteröffnung befindet sich eine begrenzt nachgiebige Dichtung, vorzugsweise eine behälterseitige Gummi oder Kunststoffdichtung mit oder ohne Hohlräumen, welche als Auflagefläche für den Deckel dient.

Die radial von der Symmetrielinie 3 nach außen verlaufenden U-Profile 8 sind starr mit der Buchse 7, vorzugsweise über eine Schraub- oder Schweißverbindung, verbunden und bilden gemeinsam den Haltearmträger. Dieser ist über die Buchse 7 auf geeignete Weise, vorzugsweise über eine Schraubverbindung mit dem Bundbolzen 4 verbunden und wird über diesen in der Federführung 6 axial zur Symmetrielinie geführt. Die Federführung 6, die fest in den Greifkopf 4 und dieser wiederum fest in den Deckel 1 eingesetzt ist, dient zudem der Führung der gegen den Bundbolzen 4 wirkenden Druckfeder 5. Auf diese Weise sind die U-Profile 8 des Haltearmträgers in jeder der möglichen Stellungen parallel zu der Ebene in Erweiterung der Dichtfläche 10 ausgerichtet.

Neu an dem Deckel ist die Bauart der am Umfang des Deckels angeordneten Klemmvorrichtungen. Jede dieser Klemmvorrichtungen besteht aus einem radial nach außen wirkenden Kniehebelmechanismus 11, der jeweils über ein festes oberes Auflager 12 am Deckel sowie über ein unteres Auflager 13 an einem zum Deckel stets parallel ausgerichteten Haltearmträger befestigt und betätigbar ist. Das obere Auflager 12 ist vorzugsweise als Lagerbock 15 für eine gelenkige Stiftverbindung fest an die Unterseite des Deckels 1 angeschweißt, während das untere Auflager 13 durch die Enden der U-Profile 8 mit einer gelenkigen Stiftverbindung gebildet werden. Der Kniehebelmechanismus ist so gestaltet, dass durch ein Anheben des Haltearmträgers mit den unteren Auflagern in Richtung des Deckels (mit der Federkraft bei Verriegelung), das Knie 14 um den Drehpunkt, d. h. um die Stiftverbindung, des oberen Auflagers 12 zunächst überwiegend, bei fortgeschrittener Drehung jedoch abnehmend radial nach außen und mit zunehmenden Fortschreiten des Verriegelungsvorganges auch zunehmend nach oben in Richtung der Dichtfläche 10 eingeschwenkt wird. Dabei schiebt sich das Knie zunächst in die Sicke unterhalb der Behälteröffnung (in der Figur nicht dargestellt), greift dort formschlüssig ein und drückt mit fortschreitender Zustellung den Deckel mit der Dichtfläche 10 gegen die Behälteröffnung.

Die Klemmvorrichtungen sind im Allgemeinen radial nach außen gerichtet in gleichen Abständen zueinander am Deckel angeordnet, sodass der Deckel durch diese über die gesamte Dichtungslänge nahezu gleichmäßig auf die Öffnung gepresst wird. Bei einer polygonalen Form der Behälteröffnung und des Deckels bietet es sich an, für jede Deckelseite mittig zwischen jeweils zwei Ecken je eine Klemmvorrichtung vorzusehen.

Besonders bei polygonalen Deckeln mit weniger als sechs Ecken besteht jedoch die Gefahr, dass die Bereiche um die Ecken mit fortschreitender Zustellung des Deckels nachgeben sodass gerade in diesen Bereichen die Dichtwirkung nicht mehr zuverlässig gewährleistet ist. In diesem Fall sind für jede Seite zwischen jeweils zwei Ecken mehrere Klemmvorrichtungen vorzusehen, welche näher an den Ecken, d. h. mit nicht gleichen Abständen am Deckel zueinander angeordnet und senkrecht zu diesen Seiten nach außen wirkend eine ausreichende Anpressung des Deckels an die Dichtung gerade in den Eckberechen gewährleisten. Alternativ kann auch für jede Seite zwischen zwei Ecken nur eine senkrecht zu der entsprechenden Seite nach außen wirkende Klemmvorrichtung angeordnet werden, wobei aber in der Nähe der Ecken mindestens je eine Klemmvorrichtung je Ecke für die erforderliche Anpressung in den Eckbereichen sorgen muss. Der Haltearmträger hierbei insbesondere im Bereich der U-Profile muss entsprechend konstruktiv, beispielsweise durch Einsetzen von Vergabelungen oder Krümmungen, entsprechend geändert werden. Weiterhin ist eine Ausführungsform, bei der die Klemmvorrichtungen radial nach außen, d. h. direkt in die Ecken eingreifen, denkbar, wobei behälterseitig lediglich im Bereich der Ecken unterhalb der zu schließenden Öffnung entsprechende Sicken, Absätze oder Einprägungen vorzusehen oder ein Stützring lediglich in diesem Bereich für eine formschlüssige Aufnahme der Klemmvorrichtung des Deckels zu gestalten ist.

Gegenüber dem Stand der Technik entsteht die Reibung im Kniehebelmechanismus nicht in einer Gleitpaarung zwischen einem Hebel und einer Öse (die Reibkräfte werden dabei sogar durch Hebelwirkung noch erhöht), sondern in vorteilhafter Weise ausschließlich in den Gelenken, welche sich durch geeignete Lagerungen (Gleit- oder Wälzlager) sogar noch weiter reduzieren lassen.

Die kinematischen Vorteile des beschriebenen Kniehebelmechanismus als Klemmvorrichtung werden zudem dadurch noch weiter optimiert, wenn zwischen der Dichtfläche 10 des Deckels 1 und der zu schließenden Behälteröffnung eine elastisch nachgiebige Dichtung, vorzugsweise eine behälterseitige Gummi- oder Kunststoffdichtung, als Auflagefläche für den Deckel, eingesetzt ist.

Ferner eignet sich der Kniehebelmechanismus durch das zunehmende Ausschwenken des Knies 14 in Richtung der Dichtfläche 10 auch zum Ausgleich von Fertigungsungenauigkeiten insbesondere hinsichtlich des Abstands zwischen der Sicke zur Öffnung des Behälters. Aus diesem Grund sind auch wiederum Fertigungsungenauigkeiten bei der Herstellung der Klemmvorrichtungen eher tolerierbar, da sie durch die günstigere Kinematik des Kniehebelmechanismus eher ausgleichbar sind. Zudem sind die Komponenten des Kniehebelmechanismus genau dimensionierbar und mit sehr hoher Fertigungsgenauigkeit herstellbar.

### Bezugszeichen:

- 1: Deckel
- 2: Greifkopf
- 3: Symmetrielinie
- 4: Bundbolzen
- 5: Druckfeder
- 6: Federführung
- 7: Buchse
- 8: U-Profil
- 9: Führungsfläche
- 10: Dichtfläche
- 11: Kniehebelmechanismus
- 12: Oberes Auflager
- 13: Unteres Auflager
- 14: Knie
- 15: Lagerbock

## Patentansprüche

1. Deckel als eine Teilkomponente eines Doppeldeckelsystems zum gasdichten Verschließen eines Behälters vorzugsweise für radioaktive oder toxische Abfälle, wobei
a) der Deckel und die zu schließende Behälteröffnung konstruktiv aneinander angepasst und eben sind und eine runde oder polygonale Form, vorzugsweise mit vier, sechs oder acht Ecken, aufweisen,
b) zwischen Deckel und der zu schließenden Behälteröffnung eine Dichtung, vorzugsweise eine behälterseitige Gummi- oder Kunststoffdichtung als Auflagefläche für den Deckel, eingesetzt ist,
c) der Deckel mit einem Klemmverschlussmechanismus mit mindestens zwei behälterseitigen Klemmvorrichtungen ausgestattet ist, welche am Deckelrand über den Deckelumfang verteilt radial über den Klemmverschlussmechanismus gekoppelt synchron nach außen wirken,
d) der zu verschließende Behälter eine Sicke, einen Absatz, eine Einprägung oder einen Stützring unterhalb der Öffnung für die formschlüssige Aufnahme der Klemmvorrichtungen des Deckels aufweist, sowie
e) der Deckel mit dem Klemmverschlussmechanismus nach den Erfordernissen eines Doppeldeckelsystems konzipiert ist, d. h. der Deckel auf der dem Behälter abgewandten Seite mit einem zentralen Greifkopf für das formschlüssige Aufnehmen des Deckels ausgestattet ist, in dem ein Bundbolzen als eine Komponente des Klemmverschlussmechanismus zum Lösen der Klemmvorrichtungen gegen eine Feder wirkend axial eindrückbar gelagert ist,
**dadurch gekennzeichnet, dass**
f) die Klemmvorrichtungen je aus einem nach außen wirkenden Kniehebelmechanismus bestehen, die jeweils über ein oberes festes Auflager am Deckel sowie über ein unteres Auflager an einem zum Deckel stets parallel angeordneten, mit dem Bundbolzen axial bewegbaren Haltearmträger befestigt und betätigbar sind.

## Claims

1. Cover as a sub-component of a dual covering system for gastight closure of a container preferably for radioactive or toxic waste, wherein
a) the cover and the container opening to be closed are structurally adapted to one another, are flat and have a round or polygonal shape, preferably with four, six or eight corners,
b) a seal, preferably a rubber or plastic seal on the container as a bearing surface for the cover, is inserted between the cover and the opening of the container which is to be closed,
c) the cover is provided with a clamping closure mechanism with at least two clamping devices on the container, which, at the edge of said cover and radially distributed around the periphery of the cover, are coupled and act synchronously in an outward direction by means of the clamping closure mechanism,
d) the container to be closed has a seam, a shoulder, an impression or a support ring under the opening for positive-fit accommodation of the clamping devices of the cover, and
e) the cover with the clamping closure mechanism is designed according to the requirements of a dual covering system, i.e. the cover is provided with a central grip head on the side facing away from the container for positive-fit accommodation of said cover, wherein a collar bolt is mounted, as a component of the clamping closure mechanism, in order to detach the clamping devices, said bolt acting counter to a spring and being able to be pressed in axially,
**characterised in that**
f) the clamping devices respectively comprise a knee lift mechanism operating in an outward direction, which can be actuated and which is respectively fixed to the cover by means of an upper fixed bearing, and fixed, by means of a lower bearing, to a retaining arm support which is permanently arranged in a parallel position with respect to the cover and which can be displaced axially with the collar bolt.

## Revendications

1. Couvercle comme composant d'un système à double couvercle pour fermer de manière étanche aux gaz, un récipient de préférence pour des déchets radioactifs ou toxiques,
selon lequel
a) le couvercle et l'ouverture du récipient à fermer, sont adaptés par construction l'un à l'autre, sont plans et ont une forme ronde ou polygonale de préférence à quatre, six ou huit sommets,
b) un joint, de préférence un joint en caoutchouc ou en matière plastique, côté récipient, est utilisé comme surface d'appui pour le couvercle entre le couvercle et l'ouverture du récipient à fermer,
c) le couvercle est équipé d'un mécanisme de fermeture par serrage ayant au moins deux dispositifs de serrage côté récipient qui sont répartis au bord du couvercle sur toute sa périphérie et ils agissent vers l'extérieur par couplage synchrone par le mécanisme de fermeture par pincement,
d) le récipient à fermer a une moulure, un épaulement, une empreinte ou une bague d'appui sous l'ouverture pour recevoir les dispositifs de pincement du couvercle par une liaison par la forme, et
e) le couvercle dont le mécanisme de fermeture par pincement est conçu selon les nécessités d'un système à double couvercle, c'est-à-dire que sur le côté non tourné vers le récipient, le couvercle est équipé d'une tête de prise centrale pour prendre le couvercle par une liaison par la forme, en ce qu'un goujon à collerette, comme composant du mécanisme de fermeture par pincement pour libérer des dispositifs de pincement est monté de façon à s'enfoncer axialement contre l'action d'un ressort,
**caractérisé en ce que**
f) les dispositifs de pincement se composent chacun d'un mécanisme à levier à genouillère agissant vers l'extérieur, ces mécanismes étant fixés et commandés respectivement par un appui fixe supérieur relié au couvercle et par un appui inférieur relié à un support de bras de fixation toujours parallèle au couvercle, et mobile axialement avec le goujon.
